# EUROPÄISCHE PATENTANMELDUNG

(11) **EP 1 564 075 A2**
(43) Veröffentlichungstag der Anmeldung: **17.08.2005**
(21) Anmeldenummer: 05002338.1
(22) Anmeldetag: 04.02.2005
(51) Int. Cl.: B60R 13/02

(54) **Dachverkleidung**

(30) Priorität: 14.02.2004 DE 102004007282
(71) Anmelder: DaimlerChrysler AG, 70567 Stuttgart (DE)
(72) Erfinder: Ernst, Ansgar, 71263 Weil der Stadt (DE); Gunst, Jochen, 73116 Wäschenbeuren (DE); Remmel, Peter, 70176 Stuttgart (DE); Schulz, Ingo, 73614 Schorndorf-Schlichten (DE)

(57) **Zusammenfassung**

Die Erfindung betrifft eine Dachverkleidung für einen Innenraum eines Fahrzeugs, insbesondere eines Kraftfahrzeugs, mit einem an einem Dachrahmen (20) des Fahrzeugs angebrachten Verkleidungsteil (12), hinter dem eine Seitenaufprallschutzeinrichtung mit mindestens einem Airbag (28) angeordnet ist, der bei einer Aktivierung der Seitenaufprallschutzeinrichtung durch eine in der Dachverkleidung vorgesehene Öffnung in den Fahrzeuginnenraum austritt, die von einer Aufklapplinie (6) begrenzt wird, die ein definiertes Aufklappen des Verkleidungsteils (12) ermöglicht, hinter dem der Airbag (28) angeordnet ist, wobei die Dachverkleidung eine Trägerschicht (31) und zum Fahrzeuginnenraum hin eine Abdeckschicht (32) umfasst.

Um eine kostengünstig herstellbare Dachverkleidung zu schaffen, die im eingebauten Zustand eine einwandfreie Optik aufweist und die Verwendung von Baumwollvliesmaterial ermöglicht, umfasst die Aufklapplinie (6) eine Vielzahl von Wasserstrahldurchtrittslöchern (35), die in der Trägerschicht (31) angebracht sind.

## Beschreibung

Die Erfindung betrifft eine Dachverkleidung für einen Innenraum eines Fahrzeugs, insbesondere eines Kraftfahrzeugs, mit einem an einem Dachrahmen des Fahrzeugs angebrachten Verkleidungsteil, hinter dem eine Seitenaufprallschutzeinrichtung mit mindestens einem Airbag angeordnet ist, der bei einer Aktivierung der Seitenaufprallschutzeinrichtung durch eine in der Dachverkleidung vorgesehene Öffnung in den Fahrzeuginnenraum austritt, die von einer Aufklapplinie begrenzt wird, die ein definiertes Aufklappen des Verkleidungsteils ermöglicht, hinter dem der Airbag angeordnet ist, wobei die Dachverkleidung eine Trägerschicht und zum Fahrzeuginnenraum hin eine Abdeckschicht umfasst.

Aus der deutschen Offenlegungsschrift DE 100 42 419 A1 ist eine Dachverkleidung mit einer Biegeachse bekannt, die durch einen eine geringere Materialdichte als die angrenzenden Bereiche aufweisenden länglich ausgebildeten Abschnitt an dem Verkleidungsteil gebildet ist. Wenn die Dachverkleidung in der Trägerschicht inhomogene Materialien, wie zum Beispiel in Kunstharz getränktes Baumwollfaservliesmaterial, umfasst, dann ist es schwierig, die Biegeachse in dem Verkleidungsteil immer in der gleichen Qualität zu reproduzieren.

Aus der deutschen Offenlegungsschrift DE 101 28 745 A1 ist eine Airbageinrichtung für ein Kraftfahrzeug bekannt, die wenigstens eine Airbag-/Gasgeneratoreinheit aufweist, die hinter einem stabilen Abdeckungs- und/oder Verkleidungsteil angeordnet und mit einer definierten Airbagaustrittsöffnung versehen ist. Die Airbagaustrittsöffnung wird durch eine Schwächelinie, ausgebildet als Perforationslinie, bestimmt, die durch eine Mehrzahl von hintereinander liegenden und voneinander beabstandeten Perforierungen definiert ist. Erfindungsgemäß weisen die Perforationslöcher hierbei eine langgestreckte Schlitzgeometrie auf und sind entlang der Perforationslinie in Längsrichtung hintereinander ausgerichtet. Das reißverschlußartige Aufreißverhalten der Schwächelinie wird durch die optimierte Kerbwirkung in der Perforationslinie erheblich verbessert. Die Perforationslöcher werden durch den Einsatz von nicht rotationssymmetrischen optischen Elementen hergestellt, die Laserstrahlen erzeugen. Bei der Bearbeitung einer Dachverkleidung, die ein in Kunstharz getränktes Baumwollfaservliesmaterial umfasst, mit Laserstrahlen verbrennt ein Teil des Materials, was zu einer bleibenden Geruchsbildung in der Dachverkleidung führt, die unerwünscht ist.

Aufgabe der Erfindung ist es, eine Dachverkleidung für einen Innenraum eines Fahrzeugs, insbesondere eines Kraftfahrzeugs, mit einem an einem Dachrahmen des Fahrzeugs angebrachten Verkleidungsteil, hinter dem eine Seitenaufprallschutzeinrichtung mit mindestens einem Airbag angeordnet ist, der bei einer Aktivierung der Seitenaufprallschutzeinrichtung durch eine in der Dachverkleidung vorgesehene Öffnung in den Fahrzeuginnenraum austritt, die von einer Aufklapplinie begrenzt wird, die ein definiertes Aufklappen des Verkleidungsteils ermöglicht, hinter dem der Airbag angeordnet ist, wobei die Dachverkleidung eine Trägerschicht und zum Fahrzeuginnenraum hin eine Abdeckschicht umfasst, zu schaffen, die kostengünstig herstellbar ist und im eingebauten Zustand eine einwandfreie Optik aufweist. Darüber hinaus soll die vorliegende Erfindung die Verwendung von Baumwollfaservliesmaterial in der Trägerschicht der Dachverkleidung ermöglichen, ohne dass es im eingebauten Zustand der Dachverkleidung zu einer unerwünschten Geruchsentwicklung kommt.

Die Aufgabe ist bei einer Dachverkleidung für einen Innenraum eines Fahrzeugs, insbesondere eines Kraftfahrzeugs, mit einem an einem Dachrahmen des Fahrzeugs angebrachten Verkleidungsteil, hinter dem eine Seitenaufprallschutzeinrichtung mit mindestens einem Airbag angeordnet ist, der bei einer Aktivierung der Seitenaufprallschutzeinrichtung durch eine in der Dachverkleidung vorgesehene Öffnung in den Fahrzeuginnenraum austritt, die von einer Aufklapplinie begrenzt wird, die ein definiertes Aufklappen des Verkleidungsteils ermöglicht, hinter dem der Airbag angeordnet ist, wobei die Dachverkleidung eine Trägerschicht und zum Fahrzeuginnenraum hin eine Abdeckschicht umfasst, dadurch gelöst, dass die Aufklapplinie eine Vielzahl von Wasserstrahldurchtrittslöchern, insbesondere Wasserstrahlschnitten umfasst, die in der Trägerschicht angebracht sind. Die Wasserstrahldurchtrittslöcher bilden eine Aufklapplinie, die ein definiertes Aufklappen des von der Aufklapplinie begrenzten Teils der Dachverkleidung ermöglicht.

Ein bevorzugtes Ausführungsbeispiel der Dachverkleidung ist dadurch gekennzeichnet, dass die Wasserstrahldurchtrittslöcher auf der dem Fahrzeuginnenraum zugewandten Seite der Trägerschicht einen größeren Querschnitt aufweisen als auf der dem Fahrzeuginnenraum abgewandten Seite. Die Trägerschicht wird also von der Sichtseite bearbeitet. Der beim Erzeugen der Aufklapplinie auf der Sichtseite in die Trägerschicht eindringende Wasserstrahl erzeugt nur ein kleines Durchtrittsloch. Der auf der anderen Seite der Trägerschicht austretende Wasserstrahl weist einen größeren Durchtrittsquerschnitt auf. Durch die erfindungsgemäße Anbringung der Wasserstrahldurchtrittslöcher in der Trägerschicht wird verhindert, dass die Wasserstrahldurchtrittslöcher vom Fahrzeuginnenraum her sichtbar sind.

Ein weiteres bevorzugtes Ausführungsbeispiel der Dachverkleidung ist dadurch gekennzeichnet, dass zwischen den Wasserstrahldurchtrittslöchern Trägerschichtmaterial angeordnet ist. Das zwischen den Wasserstrahldurchtrittslöchern verbleibende Material gewährleistet, dass das von der Aufklapplinie begrenzte Dachverkleidungsteil nur aufklappt und nicht von dem Rest der Dachverkleidung abreißt.

Ein weiteres bevorzugtes Ausführungsbeispiel der Dachverkleidung ist dadurch gekennzeichnet, dass auf der dem Fahrzeuginnenraum zugewandten Seite der Trägerschicht eine Abdeckschicht aufgebracht ist. Die Abdeckschicht wird vorzugsweise von einem Stoff gebildet, mit dem die Trägerschicht kaschiert wird. Die Abdeckschicht gewährleistet, dass weder die Trägerschicht noch die Aufklapplinie vom Fahrzeuginnenraum her sichtbar sind.

Ein weiteres bevorzugtes Ausführungsbeispiel der Dachverkleidung ist dadurch gekennzeichnet, dass zwischen der Abdeckschicht und der Trägerschicht mindestens eine Zwischenschicht angeordnet ist. Bei der Zwischenschicht kann es sich zum Beispiel um eine Schaumschicht handeln. Die Zwischenschicht dient dazu, die Dämpfungswirkung der Dachverkleidung zu verbessern.

Ein weiteres bevorzugtes Ausführungsbeispiel der Dachverkleidung ist dadurch gekennzeichnet, dass die Trägerschicht Baumwollfaservliesmaterial umfasst. Das Baumwollfaservliesmaterial liegt vorzugsweise in einem Verbund mit einem Kunstharz vor. Bei dem Kunstharz handelt es sich zum Beispiel um einen duromeren Kunststoff, der zumindest teilweise vernetzt ist.

Ein weiteres bevorzugtes Ausführungsbeispiel der Dachverkleidung ist dadurch gekennzeichnet, dass zwischen dem Airbag und dem von der Aufklapplinie begrenzten Dachverkleidungsteil ein Lastverteilungselement angeordnet ist. Das Lastverteilungselement soll verhindern, dass das von der Aufklapplinie begrenzte Verkleidungsteil bei einer Aktivierung des Airbags beschädigt wird.

Ein weiteres bevorzugtes Ausführungsbeispiel der Dachverkleidung ist dadurch gekennzeichnet, dass das Lastverteilungselement am Dachrahmen befestigt ist. Das Lastverteilungselement kann direkt am Dachrahmen befestigt sein, oder unter Zwischenschaltung eines weiteren Bauteils, zum Beispiel eines Halters für einen Handgriff.

Ein weiteres bevorzugtes Ausführungsbeispiel der Dachverkleidung ist dadurch gekennzeichnet, dass das Lastverteilungselement aus einem elastomeren Kunststoff, insbesondere aus Gummi, gebildet ist. Die Verwendung eines derartigen Kunststoffmaterials hat sich im Rahmen der vorliegenden Erfindung als besonders vorteilhaft erwiesen.

Die oben angegebene Aufgabe ist bei einem Verfahren zum Herstellen einer vorab beschriebenen Dachverkleidung dadurch gelöst, dass in der Trägerschicht durch Wasserstrahlschneiden Wasserstrahldurchtrittslöcher, insbesondere Wasserstrahlschnitte, erzeugt werden. Die Anwendung des Wasserstrahlschneidverfahrens zum Erzeugen der Aufklapplinie hat im Vergleich zur Verwendung von Laserstrahlen den Vorteil, dass bei der Bearbeitung der Dachverkleidung keine unerwünschte Geruchsentwicklung auftritt.

Ein bevorzugtes Ausführungsbeispiel des Verfahrens ist dadurch gekennzeichnet, dass die Bearbeitung von der im eingebauten Zustand der Dachverkleidung zum Fahrzeuginnenraum gewandten Seite erfolgt. Der Wasserstrahl erzeugt bei der Bearbeitung auf der Austrittsseite der Trägerschicht einen größeren Durchtrittsquerschnitt als auf der Eintrittsseite. Die Bearbeitung von der im eingebauten Zustand der Dachverkleidung zum Fahrzeuginnenraum gewandten Seite hat den Vorteil, dass die Wasserstrahldurchtrittslöcher im Fahrzeuginnenraum nicht sichtbar sind.

Ein weiteres bevorzugtes Ausführungsbeispiel des Verfahrens ist dadurch gekennzeichnet, dass nach dem Erzeugen der Wasserstrahldurchtrittslöcher in der Trägerschicht mindestens eine weitere Schicht, zum Beispiel eine Abdeckschicht oder eine Zwischenschicht, auf die Trägerschicht aufgebracht wird. Die vorzugsweise mit der Trägerschicht verklebte weitere Schicht sorgt beim Aufklappen des von der Aufklapplinie begrenzten Dachverkleidungsteils dafür, dass keine -eventuell bei der Bearbeitung der Trägerschicht anfallenden- losen Teile der Trägerschicht in den Fahrzeuginnenraum gelangen.

Weitere Vorteile, Merkmale und Einzelheiten der Erfindung ergeben sich aus der nachfolgenden Beschreibung, in der unter Bezugnahme auf die Zeichnung verschiedene Ausführungsbeispiele im Einzelnen beschrieben sind. Dabei können die in den Ansprüchen und in der Beschreibung erwähnten Merkmale jeweils einzeln für sich oder in beliebiger Kombination erfindungswesentlich sein.

Dabei zeigen:
- Fig. 1: einen Ausschnitt einer erfindungemäßen Dachverkleidung mit zwei Durchgangslöchern zur Befestigung eines Haltegriffs in perspektivischer Darstellung;
- Fig. 2: die Ansicht eines Schnitts durch ein Dach eines Kraftfahrzeugs mit einer Dachverkleidung aus Figur 1 gemäß einer ersten Ausführungsform und
- Fig. 3: eine ähnliche Schnittansicht wie in Figur 2 gemäß einer zweiten Ausführungsform mit einem Lastverteilungselement.

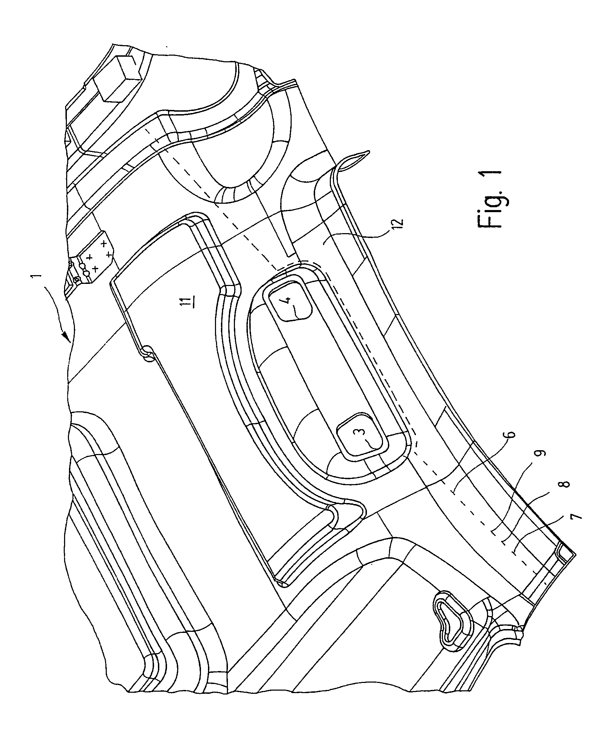

In Figur 1 ist die Dachverkleidung 1 eines Nutzfahrzeugs, insbesondere eines Lastkraftwagens, dargestellt. In der Dachverkleidung 1 sind zwei Durchgangslöcher 3, 4 zur Befestigung eines (in Figur 1 nicht dargestellten) Haltegriffs ausgespart. Außerdem ist in der Dachverkleidung 1 eine Aufklapplinie 6 angebracht, die von einer Vielzahl von Wasserstrahlschnitten 7, 8, 9 gebildet wird. Die Wasserstrahlschnitte 7 bis 9 schwächen die Dachverkleidung 1 entlang der Aufklapplinie 6. Durch die Aufklapplinie 6 wird die Dachverkleidung 1 in zwei Teile 11, 12 unterteilt. Die Aufklapplinie 6 ermöglicht ein definiertes Aufklappen des Dachverkleidungsteils 12, wenn ein zwischen dem Dachverkleidungsteil 12 und dem Fahrzeugdach angeordneter Side-Curtain-Airbag expandiert.

Die Dachverkleidung 1 wird durch thermisches Verpressen einer harzgetränkten Baumwollfaservliesmatte in einem Formwerkzeug erzeugt. Die verpresste, harzgetränkte Baumwollfaservliesmatte bildet eine Trägerschicht, die auf der zu dem Innenraum des Fahrzeugs gewandten Seite durch mindestens eine weitere Abdeckschicht kaschiert wird.

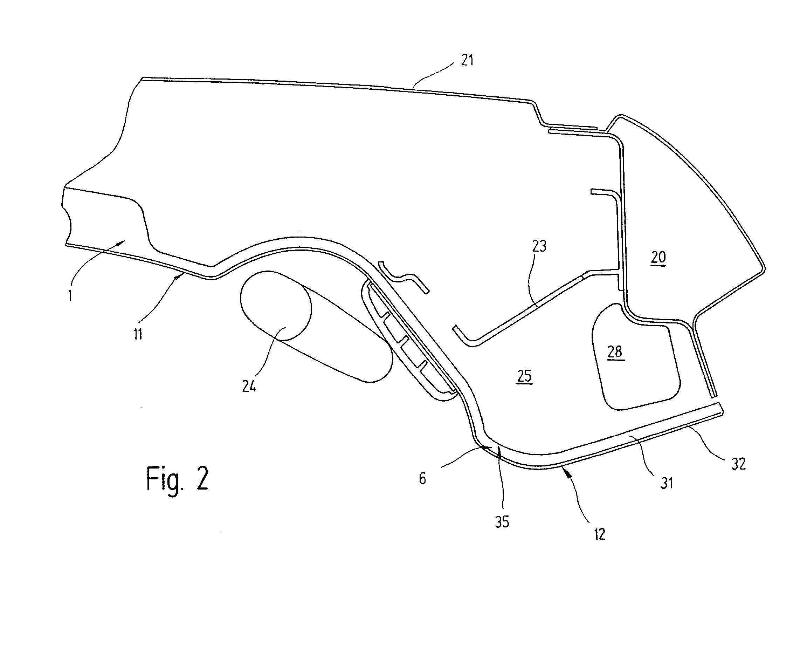

In Figur 2 ist die Dachverkleidung 1 aus Figur 1 an einem Dachrahmen 20 eines Dachs 21 eines Kraftfahrzeugs befestigt.

An dem Dachrahmen 20 ist ein Halter 23 befestigt, der wiederum zur Befestigung eines Haltegriffs 24 dient.

Zwischen dem Dachrahmen 20, dem Halter 23 und dem Verkleidungsteil 12 der Dachverkleidung 1 ist ein Hohlraum 25 ausgebildet, in dem ein Airbag 28 angeordnet ist. Bei dem Airbag handelt es sich um einen Side-Curtain-Airbag, der im Falle eines Unfalls über einen (nicht dargestellten) Gasgenerator mit Gas gefüllt wird und sich aufbläht. Das Dachverkleidungsteil 1 umfasst eine Trägerschicht 31, die aus einer harzgetränkten, verpressten Baumwollfaservliesmatte gebildet wird, und eine Abdeckschicht 32, die aus einem Stoff gebildet ist, der dazu dient, die Trägerschicht 31 zu kaschieren. Die Abdeckschicht 32 ist auf die Trägerschicht 31 aufgeklebt. Von der Aufklapplinie 6 sieht man in der Schnittdarstellung der Figur 2 nur einen Wasserstrahlschnitt 35 im Querschnitt. Der Wasserstrahlschnitt 35 weist auf der dem Dach 21 zugewandten Seite einen größeren Querschnitt auf als der dem Fahrzeuginnenraum zugewandten Seite, die durch die Abdeckschicht 32 kaschiert ist. Die Unterschiede in der Schnittweite sind in Figur 2 zur Verdeutlichung vergrößert dargestellt.

Die Schnitte 7 bis 9 (in Figur 1) und 35 (in Figur 2) werden durch Wasserstrahlschneiden von der dem Dach 21 abgewandten Fahrzeuginnenwandseite her erzeugt. Die Wasserstrahlschnitte werden in der verpressten und ausgehärteten Trägerschicht 31 angebracht, bevor die Abdeckschicht 32 aufgebracht wird. Zwischen der Abdeckschicht 32 und der Trägerschicht 31 kann mindestens eine (nicht dargestellte) Zwischenschicht angeordnet sein. Die Zwischenschicht kann von einem Schaum gebildet werden, der dazu dient, die Oberfläche des Dachhimmels auf der relativ harten Trägerschicht 31 weicher zu gestalten. Wenn der Airbag 28 aufgebläht wird, dann klappt das Verkleidungsteil 12 entlang der Aufklapplinie 6 auf, und der Airbag entfaltet sich in den Fahrzeuginnenraum. Eventuell im Bereich der Aufklapplinie 6 vom Schneidvorgang stammende Partikel der Trägerschicht 31 haften an der Abdeckschicht 32 und gelangen nicht in den Fahrzeuginnenraum.

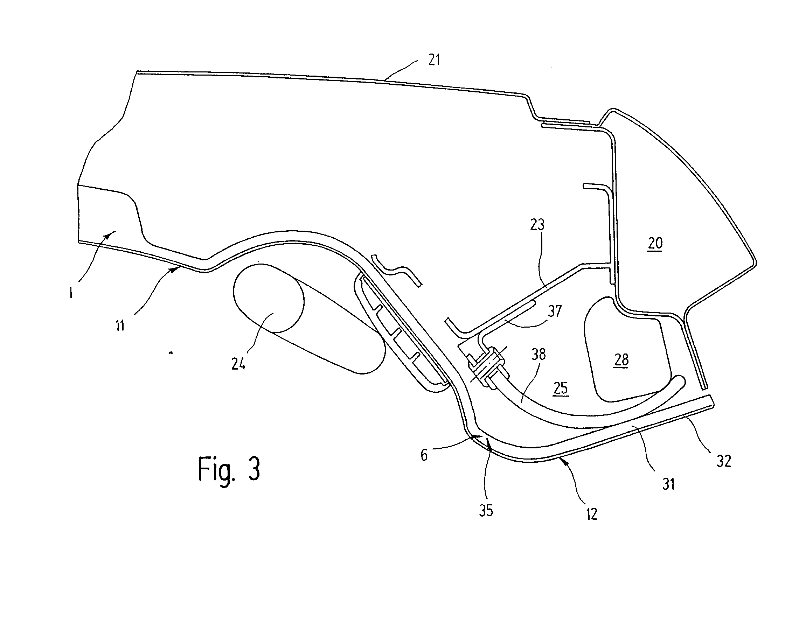

In Figur 3 ist eine leicht abgewandelte Ausführungsform mit einem Lastverteilungselement 38 dargestellt, das mittels eines Trägerelements 37 an dem Dachrahmen 20 angebracht ist. Die in Figur 3 dargestellte Ausführungsform entspricht weitestgehend der in Figur 2 dargestellten Ausführungsform. Zur Bezeichnung gleicher Teile werden dieselben Bezugszeichen verwendet. Um Wiederholungen zu vermeiden, wird auf die vorangegangene Beschreibung der Figur 2 verwiesen. Im Folgenden wird nur auf die Unterschiede zwischen den beiden Ausführungsformen eingegangen.

Bei der in Figur 3 dargestellten Ausführungsform ist das Lastverteilungselement 38 zwischen dem Airbag 28 und dem Dachverkleidungsteil 12 angeordnet. Deshalb kommt der Airbag 28, wenn er sich ausdehnt, nicht an dem Dachverkleidungsteil 12 zur Anlage, sondern an dem Lastverteilungselement 38. Das führt dazu, dass der beim Entfalten und Aufblähen des Airbags auftretende Druck über das Lastverteilungselement 38 gleichmäßig auf das Dachverkleidungsteil 12 verteilt wird. Dadurch werden Beschädigungen des Dachverkleidungsteils 12 beim Auslösen des Airbags 28 verhindert. Das Lastverteilungselement 38 ist, im Querschnitt betrachtet, zum Airbag 28 hin gekrümmt ausgebildet.

## Patentansprüche

1. Dachverkleidung für einen Innenraum eines Fahrzeugs, insbesondere eines Kraftfahrzeugs, mit einem an einem Dachrahmen (20) des Fahrzeugs angebrachten Verkleidungsteil (12), hinter dem eine Seitenaufprallschutzeinrichtung mit mindestens einem Airbag (28) angeordnet ist, der bei einer Aktivierung der Seitenaufprallschutzeinrichtung durch eine in der Dachverkleidung vorgesehene Öffnung in den Fahrzeuginnenraum austritt, die von einer Aufklapplinie (6) begrenzt wird, die ein definiertes Aufklappen des Verkleidungsteils (12) ermöglicht, hinter dem der Airbag (28) angeordnet ist, wobei die Dachverkleidung (1) eine Trägerschicht (31) und zum Fahrzeuginnenraum hin eine Abdeckschicht (32) umfasst,
**dadurch gekennzeichnet,**
**dass** die Aufklapplinie (6) eine Vielzahl von Wasserstrahldurchtrittslöchern (7-9), insbesondere Wasserstrahlschnitten, umfasst, die in der Trägerschicht (31) angebracht sind.

2. Dachverkleidung nach Anspruch 1,
**dadurch gekennzeichnet,**
**dass** die Wasserstrahldurchtrittslöcher (7-9) auf der dem Fahrzeuginnenraum zugewandten Seite der Trägerschicht (31) einen größeren Querschnitt aufweisen als auf der dem Fahrzeuginnenraum abgewandten Seite.

3. Dachverkleidung nach einem der vorhergehenden Ansprüche,
**dadurch gekennzeichnet,**
**dass** zwischen den Wasserstrahldurchtrittslöchern (7-9) Trägerschichtmaterial angeordnet ist.

4. Dachverkleidung nach einem der vorhergehenden Ansprüche,
**dadurch gekennzeichnet,**
**dass** auf der dem Fahrzeuginnenraum zugewandten Seite der Trägerschicht (31) eine Abdeckschicht (32) aufgebracht ist.

5. Dachverkleidung nach Anspruch 4,
**dadurch gekennzeichnet,**
**dass** zwischen der Abdeckschicht (32) und der Trägerschicht (31) mindestens eine Zwischenschicht angeordnet ist.

6. Dachverkleidung nach einem der vorhergehenden Ansprüche,
**dadurch gekennzeichnet,**
**dass** die Trägerschicht (31) Baumwollfaservliesmaterial umfasst.

7. Dachverkleidung nach einem der vorhergehenden Ansprüche,
**dadurch gekennzeichnet,**
**dass** zwischen dem Airbag (28) und dem von der Aufklapplinie begrenzte Dachverkleidungsteil (12) ein Lastverteilungselement (38) angeordnet ist.

8. Dachverkleidung nach Anspruch 7,
**dadurch gekennzeichnet,**
**dass** das Lastverteilungselement (38) am Dachrahmen (20) befestigt ist.

9. Dachverkleidung nach Anspruch 7 oder 8,
**dadurch gekennzeichnet,**
**dass** das Lastverteilungselement (38) aus einem elastomeren Kunststoff, insbesondere aus Gummi, gebildet ist.

10. Verfahren zum Herstellen einer Dachverkleidung (1) nach einem der vorhergehenden Ansprüche, bei dem in der Trägerschicht (31) durch Wasserstrahlschneiden Wasserstrahldurchtrittslöcher (7-9), insbesondere Wasserstrahlschnitte, erzeugt werden.

11. Verfahren nach Anspruch 10,
**dadurch gekennzeichnet,**
**dass** die Bearbeitung von der im eingebauten Zustand der Dachverkleidung (1) zum Fahrzeuginnenraum gewandten Seite erfolgt.

12. Verfahren nach Anspruch 10 oder 11,
**dadurch gekennzeichnet,**
**dass** nach dem Erzeugen der Wasserstrahldurchtrittslöcher (7-9) in der Trägerschicht (31) mindestens eine weitere Schicht (32), zum Beispiel eine Abdeckschicht oder eine Zwischenschicht, auf die Trägerschicht (31) aufgebracht wird.
